# EUROPÄISCHE PATENTSCHRIFT

(11) **EP 0 877 459 B1**
(45) Veröffentlichungstag und Bekanntmachung des Hinweises auf die Patenterteilung: **24.03.2004**
(21) Anmeldenummer: 98105707.8
(22) Anmeldetag: 28.03.1998
(51) Int. Cl.: H02B 1/46, H01R 9/24

(54) **Kabelanschlusskasten, insbesondere für den Einbau in Lichtmasten**
Cable termination box, especially for mounting in lighting poles
Boîte de terminaison de câble, notamment pour encastrement dans des lampadaires public

(30) Priorität: 10.05.1997 DE 19719788
(43) Veröffentlichungstag der Anmeldung: 11.11.1998
(73) Patentinhaber: Stadtfeld Elektrotechnische Fabrik GmbH & Co. KG, 42499 Hückeswagen (DE)
(72) Erfinder: Müller, Hans-Jürgen, 42499 Hückeswagen (DE)
(74) Vertreter: Honke, Manfred, Dr.-Ing.

(56) Entgegenhaltungen:
- DE-U- 7 702 096
- DE-U- 8 904 222

## Beschreibung

Die Erfindung betrifft eine Kabelanschlusskasten, insbesondere für den Einbau in Lichtmasten, mit einem Einbaublock zum Anschluss von Verbrauchern an ein Stromversorgungskabel mittels in dem Einbaublock angeordneter Anschlussklemmen für Leiteranschlüsse.

Bei den Verbrauchern handelt es sich im Rahmen der Erfindung regelmäßig um Leuchtstellen, bei den Leiteranschlüssen um elektrische Anschlüsse für Null-, Erdund Phasenleiter.

Kabelanschlusskästen der eingangs beschriebenen Ausführungsform sollen ein Stromverteilungsnetz mit einer Verbraucheranlage verbinden und insbes. Bedienungspersonen gegen direktes oder indirektes Berühren von unter Spannung stehenden Anlageteilen schützen. Das gilt insbes. hinsichtlich der Anschlussklemmen für die Stromeinspeisung und den Stromabgang. Sie sollen so beschaffen sein, dass sie die Leiter und deren Querschnitte sicher fassen und klemmen können. Ferner müssen die Anschlussklemmen so beschaffen angeordnet sein, dass auch ein zufälliges Berühren von unter Spannung stehenden Teilen durch Bedienungspersonen ausgeschlossen ist. Aus diesem Grunde kennt' man Anschlussklemmen mit einer isolierenden Umhüllung, die jedoch einerseits aufwendig sind, bei denen andererseits die Umhüllung Beschädigungen erfahren kann, so dass eine hinreichende Isolation nicht mehr gegeben ist. Ferner kennt man besondere Schutzdeckel als separate Bauteile für die Anschlussklemmen.

Im Übrigen ist ein Einbaublock für einen Kabelanschlusskasten bekannt, der zum Anschluss von Verbrauchern an ein Stromversorgungskabel mittels in dem Einbaublock angeordnete Anschlussklemmen für Leiteranschlüsse dient. Ferner ist zumindest eine Sicherungsaufnahme mit einer Sicherung zwischengeschaltet. Die Anschlussklemmen weisen von der Blockoberseite her zu betätigende Klemmschrauben und Klemmbuchsen für die Klemmschrauben auf. Außerdem besitzt der Einbaublock eine Abdeckplatte oberhalb der Klemmschrauben der Anschlussklemmen. Diese Abdeckplatte weist im Bereich der vorgenannten Klemmschrauben für die Anschlussklemmen Bohrungen auf (DE 89 04 222 U).

Weiter kennt man Reihenklemmen bzw. Querverbinder für Reihenklemmen, wobei der Querverbinder aus einem Verbindungssteg besteht, an dem im Abstand der Reihenklemmen zu deren Stromschienen reichende Distanzstücke über Sollbruchstellen angeordnet sind. Der Querverbinder ist mit den Distanzstücken gehaltenen Schrauben bestückt. Die Distanzstücke sind als L-förmige Laschen ausgebildet, in deren unten liegenden kurzen Querschenkeln die Schrauben angeordnet sind. Dabei sind die Schrauben durch sie von oben übergreifende, mit einer Schraubendreheröffnung versehene Halter unverlierbar gehalten (EP 0 080 612 A2).

Der Erfindung liegt die Aufgabe zugrunde, einen Kabelanschlusskasten zu schaffen, der sich nicht nur durch einen einfachen und funktionsgerechten Berührungsschutz mit hoher Lebensdauer für die Anschlussklemmen und die Sicherungen auszeichnet und zugleich die Unverlierbarkeit der Klemmschrauben von den Anschlussklemmen gewährleistet, sondern darüber hinaus auch ein einfaches und zielgerechtes manipulieren der Sicherungen ermöglicht.

Zur Lösung dieser Aufgabe ist Gegenstand der Erfindung ein Kabelanschlusskasten, insbes. für den Einbau in Lichtmasten, mit einem Einbaublock zum Anschluss von Verbrauchern an ein Stromversorgungskabel mittels in dem Einbaublock zugeordneter Anschlussklemmen für Leiteranschlüsse und unter Zwischenschaltung zumindest einer Sicherung, welche von Sicherungsaufnahmen aufgenommen wird, wobei
- die Anschlussklemmen von der Blockoberseite her zu betätigende Klemmschrauben aufweisen,
- der Einbaublock oberhalb der Klemmschrauben eine Abdeckplatte aufweist,
- die Abdeckplatte im Bereich der Klemmschrauben für die Anschlussklemmen Bohrungen aufweist, deren Durchmesser kleiner als der Kopfdurchmesser ist,
- die Abdeckplatte in einem Abstand von den Klemmschrauben angeordnet ist, der um ein vorgegebenes Maß kleiner als die Ausschraublänge der Klemmschrauben ist,
- die Abdeckplatte im Bereich der Sicherungsaufnahmen eine Durchbrechung zum Einsetzen eines Sicherungshalters aufweist, und
- der Sicherungshalter einen Deckel zum Verschließen der Durchbrechung und unterhalb des Deckels sich anschließende Halteprofile zur Aufnahme der Sicherung aufweist.

Diese Maßnahmen der Erfindung haben zur Folge, dass die Abdeckplatte bei geöffnetem Kabelanschlusskasten einen Berührungsschutz für die Anschlussklemmen bildet, ohne dass eine singuläre Isolierung der Anschlussklemmen bzw. ihrer Klemmschrauben erforderlich ist. Ferner erübrigt sich der Einsatz eines sonst erforderlichen zusätzlichen Schutzdeckels als separates Bauteil für die Anschlussklemmen. Vielmehr wird zugleich durch die Anordnung und Ausbildung der Abdeckplatte die Unverlierbarkeit der Klemmschrauben der Anschlussklemmen erreicht, zumal sich diese Klemmschrauben unverändert durch die Bohrungen der Abdeckplatte hindurch betätigen lassen, jedoch weder vollständig aus den Klemmbuchsen herausgeschraubt werden können, noch durch die Bohrungen der Abdeckplatte hindurch verloren gehen oder entfernt werden können. Denn dazu ist der Bohrungsdurchmesser kleiner als der Kopfdurchmesser der Klemmschrauben gewählt, während der Abstand der Abdeckplatte von den Anschlussklemmen bzw. ihren Klemmschrauben kleiner als die Ausschraublänge dieser Klemmschrauben gewählt ist, so dass die Klemmschrauben nicht vollständig aus ihren Klemmbuchsen herausgedreht werden können. Dabei ist die Abdeckplatte Bestandteil des Einbaublocks, mit dem sie praktisch ein Gehäuse für die Anschlussklemmen bildet. Ferner lässt sich die Sicherung mittels des Sicherungshalters im Zuge des Einsetzens in die Sicherungsaufnahme verhältnismäßig einfach und zielgerecht manipulieren. Dabei sorgt der Deckel des Sicherungshalters im Bereich der Sicherung für einen gleichsam oberen Abschluss der Abdeckplatte.

Weitere erfindungswesentliche Merkmale sind im folgenden ausgeführt. Davon ausgehend, dass die Anschlussklemmen Klemmbuchsen für die Klemmschrauben aufweisen, ist nach einem Vorschlag der Erfindung vorgesehen, dass zumindest zwei benachbarte Anschlussklemmen für Phasenleiter jeweils eine L-förmige Sicherungsklemme aufweisen, deren einer L-Schenkel auf der Unterseite mit der Klemmbuchse der betreffenden Anschlussklemme verschraubt ist und deren anderer L-Schenkel als Federschenkel ausgebildet ist und mit der Klemmbuchse eine federelastische Sicherungsaufnahme bildet, und dass die beiden Sicherungsaufnahmen der benachbarten Anschlussklemmen zur Aufnahme einer gemeinsamen Sicherung ausgerichtet sind bzw. fluchten, wobei die Sicherung zur Kontaktherstellung von den Federschenkeln gegen die beiden Klemmbuchsen gedrückt ist- Bei der Sicherung handelt es sich im Rahmen der Erfindung um eine Feinsicherung (10A/250V) also nicht um eine sonst übliche Schraubsicherung mit Gewindekorb. Der eine L-Schenkel der Sicherungsklemmen kann zusätzlich auf den Boden des Einbaublocks befestigt, z. B. mit dem Boden vernietet sein, zumal es sich insoweit um eine Hohlboden handelt und der gesamte Einbaublock in dem Kabelanschlusskasten mittels. Sockelstegen aufsteht.

Eine einwandfreie und dauerhafte Positionierung der Sicherung wird nicht nur durch die Sicherungsaufnahmen sondern auch dadurch erreicht, daß der Deckel des Sicherungshalters eine Handhabe aufweist und bei geschlossenem Kabelanschlußkasten und eingesetztem Sicherungshalter die Halteprofile auf dem Boden des Einbaublocks aufstehen und die Handhabe praktisch gegen den Kastendekkel des Kabelanschlußkastens anliegt, folglich der Sicherungshalter und mit ihm die Sicherung insoweit in dem Einbaublock - auch unter Zuhilfenahme der Sicherungsaufnahmen - einwandfrei positioniert und fixiert ist. Die Halteprofile des Sicherungshalters können über einen Basissteg zu einem U-förmigen Halterahmen vereinigt sein um Deformationen in bezug auf die. Aufnahme für die Sicherung zu vermeiden. Denn die Halteprofile weisen zweckmäßigerweise fluchtende Ausnehmungen, z. B. Rastausnehmungen zur Aufnahme der Sicherung, z. B. eben einer Feinsicherung auf. Ferner lehrt die Erfindung, daß der Sicherungshalter, z. B. sein Deckel auf einer Seite einen Führungsund Zentrierungsansatz, gegebenenfalls mit einer Führungsnase aufweist, der in eine entsprechende Führungsausnehmung in der Abdeckplatte eingreift. Dadurch wird die lagegenaue Fixierung des Sicherungshalters und folglich der Sicherung optimiert. - Der Einbaublock besitzt im übrigen in an sich bekannter Weise Befestigungsohren zum Einbau in einen Kabelanschlußkasten, z. B. für kleine Lichtmasten.

Im folgenden wird die Erfindung anhand einer lediglich ein Ausführungsbeispiel darstellenden Zeichnung näher erläutert. Es zeigen:

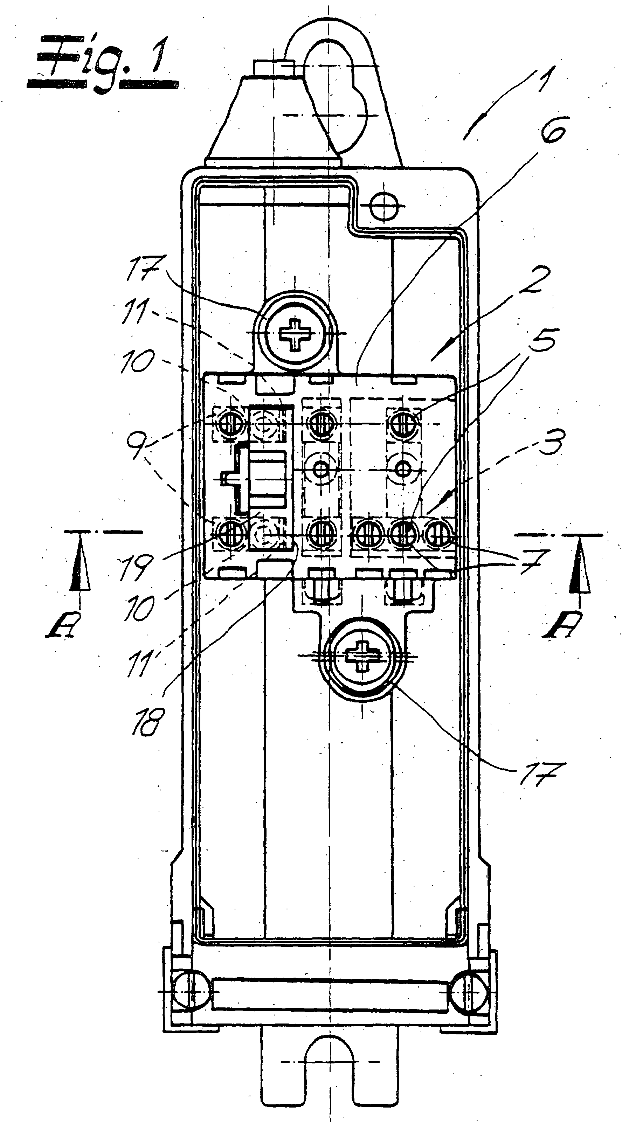

- Fig. 1: einen erfindungsgemäßen Kabelanschlußkasten in Draufsicht bei abgenommenem Kastendeckel,

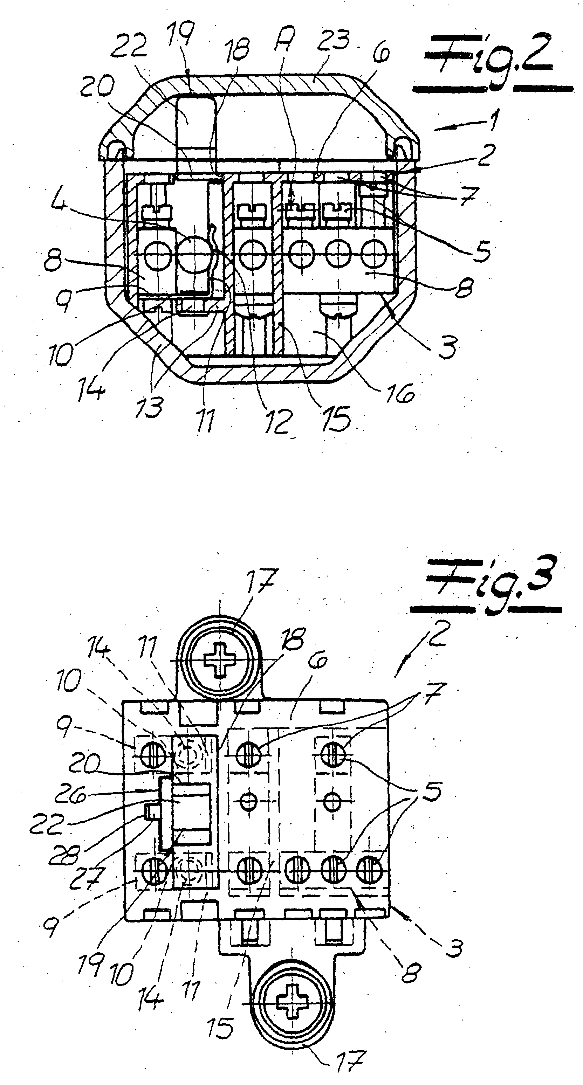

- Fig. 2: einen Vertikalschnitt A-A durch den Gegenstand nach Fig. 1 bei aufgesetztem Kastendeckel.

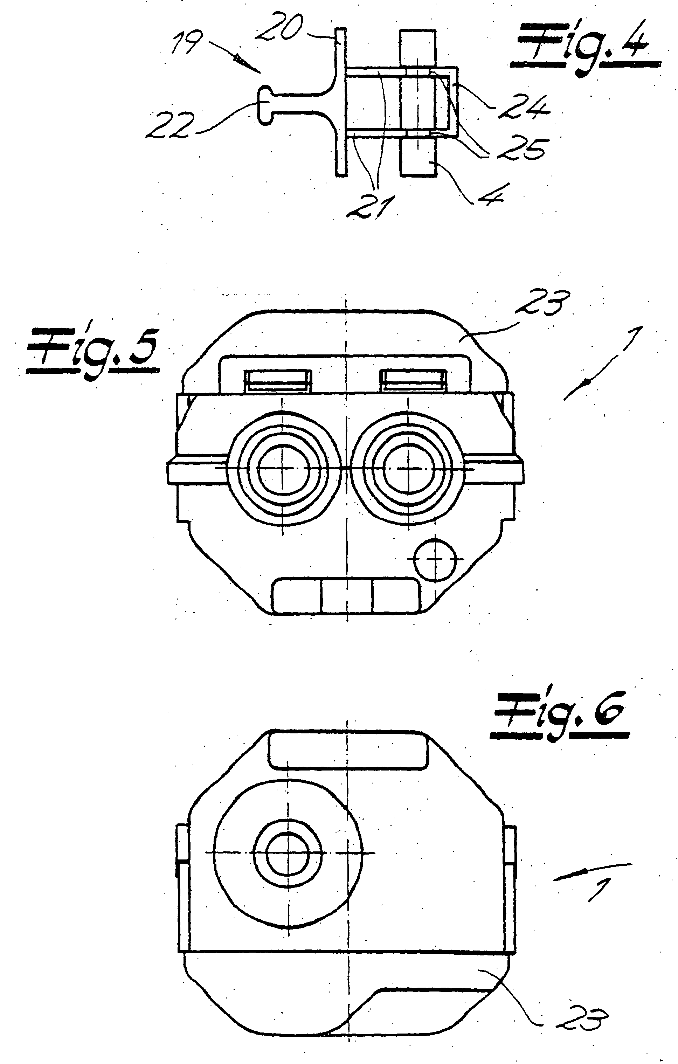

- Fig. 3: einen Einbaublock für den Gegenstand nach Fig. 1 in Draufsicht.
- Fig. 4: einen Sicherungshalter mit Sicherung für den Gegenstand nach Fig. 1 in Seitenansicht.
- Fig. 5: eine Stirnansicht auf den Gegenstand nach Fig. 1 mit Kabelzugang und
- Fig. 6: eine Stirnansicht auf den Gegenstand nach Fig. 1 mit Kabelabgang.

In den Figuren ist ein Kabelanschlußkasten 1 für den Einbau in Lichtmasten und insbes. kleinen Lichtmasten dargestellt. In diesen Kabelanschlußkasten 1 ist ein Einbaublock 2 zum Anschluß von Verbrauchern (z. B, Leuchtstellen), an ein Stromversorgungskabel mittels in dem Einbaublock angeordneter Anschlußklemmen 3 für Leiteranschlüsse und unter Zwischenschaltung zumindest einer Sicherung 4 angeordnet. Die Anschlußklemmen 3 weisen von der Biockoberseite her zu betätigende Klemmschrauben 5 auf. Der Einbaublock 2 weist oberhalb der Klemmschrauben 5 eine Abdeckplatte 6 auf. Die Abdeckplatte 6 besitzt im Bereich der Kiemmschrauben 5 Bohrungen 7, deren Durchmesser kleiner als der Kopfdurchmesser und folglich Durchmesser der Schraubenköpfe der Klemmschrauben 5 ist. Ferner ist die Abdeckplatte 6 in einem Abstand A von den Klemmschrauben 5 angeordnet, der um ein vorgegebenes Maß kleiner als die Ausschraublänge der Klemmschrauben 5 ist. Die Anschlußldemmen 3 weisen für die Klemmschrauben 5 Klemmbuchsen 8 auf. Zumindest zwei benachbarte Anschlußklemmen 3 für Phasenleiter L1 weisen jeweils eine L-förmige Sicherungsklemme 9 auf, deren einer L-Schenkel 10 auf der Unterseite mit der Klemmbuchse 8 der betreffenden Anschlußklemme 3 verschraubt ist und deren anderer L-Schenkel als Federschenkel 11 ausgebildet ist und mit der Klemmbuchse 8 eine federelastische Sicherungsaufnahme 12 bildet. Die beiden Sicherungsaufnahmen 12 der benachbarten Anschlußklemmen 3 sind zur Aufnahme einer gemeinsamen Sicherung 4, nämlich Feinsicherung 10A/250V ausgerichtet bzw. fluchten. Die Sicherung 4 ist mittels der Federschenkel 11 zur Kontaktherstellung gegen die beiden Klemmbuchsen 8 gedrückt. Der eine L-Schenkel 10 der Sicherungsklemmen 9 kann zusätzlich auf den Boden 13 des Einbaublocks 2 mittels Nieten 14 befestigt sein. Der Einbaublock 2 selbst besteht wie die Abdeckplatte 6 aus Kunststoff und bildet mit der Abdeckplatte 6 ein gehäuseähnliches Gebilde und ist durch Trennwände 15 in verschiedene Kammern unterteilt, wobei sich unterhalb des Bodens 13 vorkragende Sockelstege 16 befinden, mit denen der Einbaublock 2 auf dem Boden 13 des Kabelanschlußkastens 1 aufsteht. Außerdem besitzt der Einbaublock 2 Befestigungsohren 17 zum Fixieren des Einbaublocks 2 in dem Kabelanschlußkasten 1.

Die Abdeckplatte 6 weist im Bereich der beiden Sicherungsaufnahmen 12 eine Durchbrechung 18 zum Einsetzen eines Sicherungshalters 19 auf, wobei der Sicherungshalter 19 einen Deckel 20 zum Verschließen der Durchbrechung 18 und unterhalb des Deckels 20 sich anschließende Kalteprofile 21 für die Aufnahme der Sicherung 4 aufweist. Der Deckel 20 des Sicherungshalters 19 besitzt eine Handhabe 22. Bei geschlossenem Kabelanschlußkasten 1 und eingesetztem Sicherungshalter 19 stehen die Halteprofile 21 auf dem Boden 13 des Einbaublocks 2 auf, während die Handhabe 22 nahezu gegen den Kastendeckel 23 des Kabelanschlußkastens 1 anliegt. Aus Stabilitätsgründen sind die Halteprofile 21 des Sicherungshalters 19 über einen Basissteg 24 zu einem U-förmigen Hatterahmen vereinigt. Die Halteprofile 21 weisen fluchtende Ausnehmungen 25, z. B. Rastausnehmungen zur Aufnahme der Feinsicherung 4 auf. Der Sicherungshalter 19 bzw. sein Deckel 20 besitzt auf einer Seite einen Führungs- und Zentrieransatz 26 mit einer Führungsnase 27, die in eine entsprechende Führungsausnehmung 28. in der Abdeckplatte 6 eingreifen. Der erfindungsgemäße Kabelanschlußkasten (1) ist spritzwassergeschützt und insbesondere für den Einsatz in Polierleuchten geeignet.

## Patentansprüche

1. Kabelanschlusskasten (1), insbes. für den Einbau in Lichtmasten, mit einem Einbaublock (2) zum Anschluss von Verbrauchern an ein Stromversorgungskabel mittels in dem Einbaublock (2) angeordneter Anschlussklemmen (3) für Leiteranschlüsse und unter Zwischenschaltung zumindest einer Sicherung (4), welche von Sicherungsaufnahmen (12) aufgenommen wird, wobei
- die Anschlussklemmen (3) von der Blockobersei'te her zu betätigende Klemmschrauben (5) aufweisen,
- der Einbaublock (2) oberhalb der Klemmschrauben (5) eine Abdeckplatte (6) aufweist,
- die Abdeckplatte (6) im Bereich der Klemmschrauben (5) für die Anschlussklemmen (3) Bohrungen (7) aufweist, deren Durchmesser kleiner als der Kopfdurchmesser der Klemmschrauben (5) ist,
- die Abdeckplatte(6) in einem Abstand (A) von den Klemmschrauben (5) angeordnet ist, der um ein vorgegebenes Maß kleiner als die Ausschraublänge der Klemmschrauben (5) ist,
- die Abdeckplatte (6) im Bereich der Sicherungsaufnahmen (12) eine Durchbrechung (18) zum Einsetzen eines Sicherungshalters (19) aufweist, und
- der Sicherungshalter (19) einen Deckel (20) zum Verschließen der Durchbrechung (18) und unterhalb des Deckels (20) sich anschließende Halteprofile (21) zur Aufnahme der Sicherung (4) aufweist.

2. Kabelanschlusskasten nach Anspruch 1, wobei die Anschlussklemmen Klemmbuchsen für die Klemmschrauben aufweisen, **dadurch gekennzeichnet, dass** zumindest zwei benachbarte Anschlussklemmen (3) für Phasenleiter (L1) jeweils eine L-förmige Sicherungsklemme (9) aufweisen, deren einer L-Schenkel (10) auf der Unterseite mit der Klemmbuchse' (8) der betreffenden Anschlussklemme (3) verschraubt ist und deren anderer L-Schenkel als Federschenkel (11) ausgebildet ist und mit der Klemmbuchse (8) eine federelastische Sicherungsaufnahme (12) bildet, und dass die beiden Sicherungsaufnahmen (12) der benachbarten Anschlussklemmen (3) zur Aufnahme einer gemeinsamen Sicherung (4) ausgerichtet sind, welche zur Kontaktherstellung gegen die beiden Klemmbuchsen (8) gedrückt ist.

3. Kabelanschlusskasten nach Anspruch 1 oder 2, **dadurch gekennzeichnet, dass** der eine L-Schenkel (10) der Sicherungsklemmen (9) auf dem Boden (13) des Einbaublocks (2) befestigt, z. B. mit dem Boden vernietet ist.

4. Kabelanschlusskasten nach einem der Ansprüche 1 bis 3, **dadurch gekennzeichnet, dass** der Deckel (20) eine Handhabe (22) aufweist und bei geschlossenem Kabelanschlusskasten (1) und eingesetztem Sicherungshalter (19) die Halterprofile (21) auf dem Boden (13) des Einbaublocks (2) aufstehen und die Handhabe (22) nahezu gegen den Kastendeckel (23) des Kabelanschlusskastens (1) anliegt.

5. Kabelanschlusskasten nach einem der Ansprüche 1 bis 4, **dadurch gekennzeichnet, dass** die Halterprofile (21) des Sicherungshalters (19) über einen Basissteg (24) zu einem U-förmigen Halterahmen vereinigt sind.

6. Kabelanschlusskasten nach einem der Ansprüche 1 bis 5, **dadurch gekennzeichnet, dass** die Halterprofile (21) fluchtende Ausnehmungen (25), z.B. Rastausnehmungen zur Aufnahme der Sicherung (4), z.B. einer Feinsicherung aufweisen.

7. Kabelanschlusskasten nach einem der Ansprüche 1 bis 6, **dadurch gekennzeichnet, dass** der Sicherungshalter (19) bzw. sein Deckel (20) auf einer Seite einen Führungs- und Zentrieransatz (26), gegebenenfalls mit einer Führungsnase (27), aufweist, der in eine entsprechende Führungsausnehmung (28) in der Abdeckplatte (6) eingreift.

8. Kabelanschlusskasten nach einem der Ansprüche 1 bis 7, **dadurch gekennzeichnet, dass** die Abdeckplatte (6) aus Kunststoff oder einem anderen Isoliermaterial besteht.

## Claims

1. A cable connection box (1), in particular for installation in light standards, with an installation unit (2) for the connection of consumers to a power supply cable by means of connection terminals (3) for conductor connections, said connection terminals being arranged in the installation unit (2), and with the interposition of at least one fuse (4), which is accommodated by fuse mountings (12), whereby
- the connection terminals (3) have terminal screws (5) to be manipulated from the upper side of the unit,
- the installation unit (2) has a cover plate (6) above the terminal screws (5),
- the cover plate (6) has holes (7) in the area of the terminal screws (5) for the connection terminals (3), the diameter of which holes is smaller than the head diameter of the terminal screws (5),
- the cover plate (6) is arranged as a distance (A) from the terminal screws (5) which is smaller by a predetermined amount than the unscrewed length of the terminal screws (5),
- the cover plate (6), in the area off the fuse mountings (12), has an opening (18) for the insertion of a fuse holder (19), and
- the fuse holder (19) has a cover (20) for closing the opening (18) and holder profiles (21) following beneath the cover (20) for accommodating the fuse (4).

2. The cable connection box according to claim 1, whereby the connection terminals have terminal bushes for the terminal screws, **characterised in that** at least two neighbouring connection terminals (3) for phase conductors (L1) each have an L-shaped fuse terminal (9), whereof one L-leg (10) is screwed on the underside to the terminal bush (8) of the respective connection terminal (3) and whereof the other L-leg is designed as a spring leg (11) and forms with the terminal bush (8) a spring-elastic fuse mounting (12), and that the two fuse mountings (12) of the neighbouring connection terminals (3) are aligned to accommodate a common fuse (4), which is pressed against the two terminal bushes (8) to produce the contact.

3. The cable connection box according to claim 1 or 2, **characterised in that** the one L-leg (10) of the fuse terminals (9) is fixed on the bottom (13) of the installation unit (2), e.g. is riveted to the bottom.

4. The cable connection box according to any one of claims 1 to 3, **characterised in that** the cover (20) has a handle (22) and, when the cable connection box (1) is closed and the fuse holder (19) is inserted, the holder profiles (21) stand on the bottom (13) of the installation unit (2) and the handle lies almost adjacent to the box cover (23) of the cable connection box (1).

5. The cable connection box according to any one of claims 1 to 4, **characterised in that** the holder profiles (21) of the fuse holder (19) are united by a base web (24) to form a U-shaped holding frame.

6. The cable connection box according to any one of claims 1 to 5, **characterised in that** the holder profiles (21) have aligned cut-outs (25), e.g. notched cut-outs, for accommodating the fuse (4), e.g. a fine-wire fuse.

7. The cable connection box according to any one of claims 1 to 6, **characterised in that** the fuse holder (19), or more precisely its cover (20), has on one side a guide and centring shoulder (36), optionally with a guide nose (27), said shoulder engaging in a corresponding guide cut-out (28) in the cover plate (6).

8. The cable connection box according to any one of claims 1 to 7, **characterised in that** the cover plate (6) is made of plastic or another insulating material.

## Revendications

1. Boîte de raccordement de câbles (1), en particulier pour encastrement dans des lampadaires publics, avec un bloc d'encastrement (2) pour le raccordement de récepteurs à un câble d'alimentation en courant au moyen de bornes de connexion (3) pour le raccordement de conducteurs, disposées dans le bloc d'encastrement (2) et avec intercalage d'au moins un fusible (4), qui est reçu dans des logements de fusible (12), dans laquelle
- les bornes de connexion (3) présentent, des vis de serrage (5) à manoeuvrer, depuis le côté supérieur du bloc,
- le bloc d'encastrement (2) présentent, au-dessus des vis de serrage (5), une plaque de recouvrement (6),
- la plaque de recouvrement (6) présentant, dans la zone des vis de serrage (5), des trous (7) pour les bornes de connexion (3), dont le diamètre est inférieur au diamètre de tête des vis de serrage (5),
- la plaque de recouvrement (6) est disposée, à distance (A) des vis de serrage (5), qui est inférieure d'une valeur prédéfinie à la longueur de dévissage des vis de serrage (5),
- la plaque de recouvrement (6) présente, dans la zone des logements de fusible (12), une découpe (18) pour la mise en place d'un porte-fusible (19) et
- le porte-fusible (19) présente un couvercle (20) pour fermer la découpe (18) et des profilés de support, qui se raccordent au-dessous du couvercle (20), pour recevoir le fusible (4).

2. Boîte de raccordement de câbles selon la revendication 1, dans laquelle les bornes de connexion présentent des douilles de serrage pour les vis de blocage, **caractérisée en ce qu'**au moins deux bornes de connexion (3) voisines présentent pour le fil de phase (L1) respectivement une borne-fusible (9) en forme de L, dont une branche en L (10) est vissée sur le côté inférieur avec la douille de serrage (8) de la borne de raccord (3) concernée et dont l'autre branche en L est constituée en tant que branche à ressort (11) et forme, avec la douille de serrage (8), un logement de fusible à déformation élastique (12) et que les deux logements de fusible (12) des bornes de connexion (3) voisines sont orientés pour recevoir un fusible (4) commun, qui est pressé contre les deux douilles de serrage (8) pour établir le contact.

3. Boîte de raccordement de câbles selon la revendication 1 ou 2, **caractérisé en ce que** l'une des branches en forme de L (10) des bornes-fusibles (9) est fixée sur le fond (13) du bloc d'encastrement (2), par exemple qu'elle est rivetée au fond.

4. Boîte de raccordement de câbles selon l'une des revendications 1 à 3, **caractérisé en ce que** le couvercle (20) présente une manette (22) et que les profilés de support (21) font saillie du fond (13) du bloc d'encastrement (2), quand la boîte de raccordement de câbles (1) est fermée et que le porte-fusible (19) est mis en place et la manette (22) porte presque contre le couvercle de boîte (23) de la boîte de raccordement" de câbles (1).

5. Boîte de raccordement de câbles selon l'une des revendications 1 à 4, **caractérisé en ce que** les profilés de support (21) du porte-fusible (19) sont réunis, par l'intermédiaire d'une barrette de base (24), en un bâti de retenue en forme de U.

6. Boîte de raccordement de câbles selon l'une des revendications 1 à 5, **caractérisé en ce que** les profilés de support (21) présentent des évidements en alignement (25), par exemple des évidements d'encliquetage pour lé logement du fusible (4), par exemple un fusible fin.

7. Boîte de raccordement de câbles selon l'une des revendications 1 à 6 **caractérisé en ce que** le porte-fusible (19) ou son couvercle (20) présente sur un côté une saillie de guidage et de centrage (26), le cas échéant avec un bec de guidage (27), qui vient en prise dans un évidement de guidage (28) correspondant, dans la plaque de recouvrement (6).

8. Boîte de raccordement de câbles selon l'une des revendications 1 à 7, **caractérisé en ce que** la plaque de recouvrement (6) se compose de matière plastique ou d'un autre matériau isolant.
